# EUROPEAN PATENT APPLICATION

(11) **EP 3 670 208 A1**
(43) Date of publication of application: **24.06.2020**
(21) Application number: 19218346.5
(22) Date of filing: 19.12.2019
(51) Int. Cl.: B60C 11/03, B60C 11/12

(54) **WINTER TIRE TREAD**

(30) Priority: 20.12.2018 US 201816227129
(71) Applicant: The Goodyear Tire & Rubber Company, Akron, OH 44316 (US)
(72) Inventor: PHILIPOT, Benjamin, F-57330 Hettange Grande (FR); LEYSSENS, Jan, B-6860 Leglise-Beheme (BE); MOIA, Robin, F-57070 Metz (FR); CRETON, Roel, L-8835 Folschette (LU)
(74) Representative: Kutsch, Bernd

(57) **Abstract**

A tread for a tire is disclosed. The tread (2) comprises a center rib (4) formed by two circumferential main grooves (3) extending along a tire circumferential direction in a center of a tread width direction, each circumferential main groove (3) having the same axial distance (W₁) from a tire equatorial plane (CL) of the tread (2). The center rib (4) further has a plurality of first main inclined grooves (15) and a plurality of second main inclined grooves (16), the first and second main inclined grooves (15, 16) being inclined oppositely with respect to the tire circumferential direction such that the main inclined grooves (15, 16) become distanced from the tire equatorial plane from trailing edges in a tire rotational direction toward leading edges; the trailing edges of the first main inclined grooves (15) connecting with one circumferential main groove (3), while the trailing edges of the second main inclined grooves (16) connect with the other circumferential main groove (3). The first and second main inclined grooves (15, 16) are arranged such that mutual leading edges thereof are disposed alternately in the tire circumferential direction, extend axially beyond the tire equatorial plane (CL). The first and second main inclined grooves (15, 16) (i) define two zigzag shaped central grooves (17, 18) extending along the tire circumferential direction, one zigzag shaped central groove (17) being disposed on one side of the tire equatorial plane (CL) and the other zigzag shaped central groove (18) being disposed on an opposite side of the tire equatorial plane (CL) or (ii) define a zigzag shaped central groove extending along the tire circumferential direction, the zigzag shaped central groove being completely disposed on one side of the tire equatorial plane (CL).

## Description

### Field of Invention

The present technology relates to a tire tread that improves stability on snow-covered road surfaces without causing a deterioration in steering stability on dry and wet road surfaces.

### Background of the Present Invention

Conventionally, the object of a tire is to reduce hydroplaning and improve winter performance without reducing dry performance. The tread of the conventional tire may be equipped with a center block column extending in the tire circumferential direction and block columns arranged in a shoulder portion and separated from the center block column by two circumferential grooves. The tread may thereby guide water from a center circumferential flat plane to both sides by providing grooved blocks of the center block column. The grooved blocks may be made up of two groove portions that are separated from each other by an inclined groove and intersect in the center circumferential flat plane by forming an angle with the inclined groove. Moreover, the tread may discharge snow by providing circumferential grooves that extend at an acute angle with respect to the tire equatorial plane (tire circumferential flat plane).

The conventional tire may further include grooves connecting to the adjacent inclined grooves in the tire circumferential direction (tire rolling direction). These connecting groove may become narrower to equalize the size of the blocks of the center block column. Although making the grooves narrower may be effective with respect to snow-covered road surfaces, steering stability on dry road surfaces may be impacted since the stiffness of the blocks is also altered. Additionally, water discharge performance may be reduced and steering stability on wet road surfaces may be reduced since the grooves that connect with the inclined grooves are inclined in the direction opposite the inclined grooves and thus work against the action of the inclined grooves to guide water from the center circumferential flat plane to both sides and thus detrimentally return the water to the center circumferential flat plane side.

### Definitions

"Annular" means formed like a ring.
"Asymmetric tread" means a tread that has a tread pattern not symmetrical about the center plane or equatorial plane EP of the tire.
"Axial" and "axially" refer to lines or directions that are parallel to the axis of rotation of the tire.
"Circumferential" and "circumferentially" mean lines or directions extending along the perimeter of the surface of the annular tire parallel to the equatorial plane (EP) and perpendicular to the axial direction.
"Crown" means that portion of the tire within the width limits of the tire tread.
"Equatorial plane (EP)" means the plane perpendicular to the tire's axis of rotation and passing through the center of its tread; or the plane containing the circumferential centerline of the tread.
"Groove" means an elongated void area in a tread that may extend circumferentially or laterally about the tread in a straight, curved, or zigzag manner. Circumferentially and laterally extending grooves sometimes have common portions. The "groove width" is the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.
"Lateral" means an axial direction.
"Net-to-gross ratio" means the total area of ground contacting tread elements between lateral edges of the tread around the entire circumference of the tread divided by the gross area of the entire circumference of the tread between the lateral edges.
"Rib" means a circumferentially extending strip of rubber on the tread which is defined by at least one circumferential groove and either a second such groove or a lateral edge, the strip being laterally undivided by full-depth grooves.
"Sipe" or "incision" means small slots molded into the tread elements of the tire that subdivide the tread surface and improve traction; sipes are designed to close when within the contact patch or footprint, as distinguished from grooves.
"Tread element" or "traction element" means a rib or a block element.
"Tread width" means the arc length of the tread surface in a plane including the axis of rotation of the tire.

### Summary of the Invention

The invention relates to a tread in accordance with claim 1 and to a tire in accordance with claim 15.

Dependent claims refer to preferred embodiments of the invention.

A first preferred example tread for a tire in accordance with the present invention includes a center rib formed by two circumferential main grooves extending along a tire circumferential direction in a center of a tread width direction. Each circumferential main groove being the same axial distance from a tire equatorial plane of the tread. The center rib has a plurality of first main inclined grooves and a plurality of second main inclined grooves. The first and second main inclined grooves are inclined oppositely with respect to the tire circumferential direction such that the first and second main inclined grooves become distanced from the tire equatorial plane from trailing edges in a tire rotational direction toward leading edges. The trailing edges of the first main inclined grooves connect with one circumferential main groove. The trailing edges of the second main inclined grooves connect with the other circumferential main groove. The first and second main inclined grooves are arranged such that mutual leading edges thereof are disposed alternately in the tire circumferential direction, extend axially beyond the tire equatorial plane and define two zigzag shaped central grooves along the tire circumferential direction. One zigzag shaped central groove is disposed on one side of the tire equatorial plane and the other zigzag shaped central groove is disposed on an opposite side of the tire equatorial plane.

According to a preferred aspect of the first tread, each first main inclined groove intersects with between 3 and 6 second main inclined grooves with leading edges of each first main inclined groove being disposed at a different second main inclined groove.

According to still another preferred aspect of the first tread, each second main inclined groove intersects with between 3 and 6 first main inclined grooves with leading edges of each second main inclined groove being disposed at a different first main inclined groove.

According to yet another preferred aspect of the first tread, each zigzag groove has a groove width in a range from 2.0 mm to 6.0 mm.

According to still another preferred aspect of the first tread, the first and second main inclined grooves radially outside of the zigzag grooves have a groove width in a range of 2.0 mm to 10.0 mm and a radial groove depth in a range of 2.0 mm to 10.0 mm.

According to yet another preferred aspect of the first tread, the first and second main inclined grooves have a curved shape.

According to still another preferred aspect of the first tread, the first and second main inclined grooves form opposite angles with respect to the circumferential main grooves, the angles being between 56° and 76° and -56° and - 76°.

According to yet another preferred aspect of the first tread, the first and second main inclined grooves form equal and opposite angles with respect to the circumferential main grooves at trailing edges connecting to the circumferential main grooves.

According to still another preferred aspect of the first tread, a first shoulder rib and a second shoulder are disposed adjacent the center rib. The first and second shoulder ribs includes inclined transverse grooves extending axially outward from the circumferential main grooves.

According to yet another preferred aspect of the first tread, the inclined transverse grooves have a groove width from 2.0 mm to 4.0 mm and a radial groove depth from 2.0 mm to 4.0 mm.

A second preferred example tread for a tire in accordance with the present invention includes a center rib formed by two circumferential main grooves extending along a tire circumferential direction in a center of a tread width direction. Each circumferential main groove is the same axial distance from a tire equatorial plane of the second tread. The center rib has a plurality of first main inclined grooves and a plurality of second main inclined grooves. The first and second main inclined grooves are inclined oppositely with respect to the tire circumferential direction such that the main inclined grooves become distanced from the tire equatorial plane from trailing edges in a tire rotational direction toward leading edges. The trailing edges of the first main inclined grooves connect with one circumferential main groove. The trailing edges of the second main inclined grooves connect with the other circumferential main groove. The first and second main inclined grooves are arranged such that mutual leading edges thereof are disposed alternately in the tire circumferential direction, extend axially beyond the tire equatorial plane, and define a zigzag shaped central groove extending along the tire circumferential direction. The zigzag shaped central groove is completely disposed on one side of the tire equatorial plane.

According to a preferred aspect of the second tread, each first main inclined groove intersects with 4 second main inclined grooves with leading edges of each first main inclined groove being disposed at a different second main inclined groove.

According to another preferred aspect of the second tread, each second main inclined groove intersects with 5 first main inclined grooves with leading edges of each second main inclined groove being disposed at a different first main inclined groove.

According to yet another preferred aspect of the second tread, each zigzag groove has a groove width in a range from 2.0 mm to 6.0 mm.

According to still another preferred aspect of the second tread, the main inclined grooves radially outside of the zigzag groove have a groove width in a range of 2.0 mm to 10.0 mm and a radial groove depth in a range of 2.0 mm to 10.0 mm.

According to yet another preferred aspect of the second tread, the first and second main inclined grooves have a linear shape.

According to still another preferred aspect of the second tread, the first and second main inclined grooves form opposite angles with respect to the circumferential main grooves, the angles being between 50° and 70° and -50° and - 70°.

According to yet another preferred aspect of the second tread, a shoulder rib is disposed adjacent the center rib. The shoulder rib includes inclined transverse grooves extending axially outward.

According to still another preferred aspect of the second tread, the inclined transverse grooves have a groove width from 2.0 mm to 4.0 mm and a radial groove depth from 2.0 mm to 4.0 mm.

According to yet another preferred aspect of the second tread, a second shoulder rib is disposed adjacent the center rib on an opposite axial side of the center rib from the first shoulder rib. The second shoulder rib includes inclined transverse grooves extending axially outward at an angle opposite the inclined transverse grooves of the first shoulder rib.

### Brief Description of the Drawings

The present invention will be more clearly understood by the following description of some examples thereof, with reference to the accompanying drawings, in which:
FIG. 1 is a schematic perspective view of an example tire in accordance with the present invention.
FIG. 2 is a schematic plan view of the tire illustrated in FIG. 1.
FIG. 3 is a schematic enlarged plan view of the tire illustrated in FIG. 1.
FIG. 4 is a schematic sectional view taken along line "4-4" in FIG. 3.

### Description of Example Embodiments of the Present Invention

An example of the present invention is described below in detail based on the drawings. However, the present invention is not limited to this example. The constituents of the example include components that may be replaced by those skilled in the art with components substantially equivalent. Furthermore, the multiple modified alternatives described in the example may be combined as desired within the scope apparent to one skilled in the art.

In the following description, "tire radial direction" refers to a direction orthogonal to the rotational axis of a tire; "inner side in the tire radial direction" refers to the side facing the rotational axis in the tire radial direction; and "outer side in the tire radial direction" refers to the side distanced from the rotational axis in the tire radial direction. The tire may be pneumatic or non-pneumatic. Additionally, "tire width direction" refers to the direction parallel to the rotational axis; "inner side in the tire width direction" refers to the side facing a tire equatorial plane (tire equator line) CL in the tire width direction; and "outer side in the tire width direction" refers to the side distanced from the tire equatorial plane CL in the tire width direction. Furthermore, "tire circumferential direction" refers to a circumferential direction with the rotational axis as a center axis. "Tire equatorial plane CL" refers to a plane that is orthogonal to the rotational axis of the tire and that passes through a center of a tire width of the tire. "Tire equator line" refers to a line along the circumferential direction of the tire that lies on the tire equatorial plane CL. In this example, "tire equator line" is given the same reference symbol "CL" as that used for the tire equatorial plane.

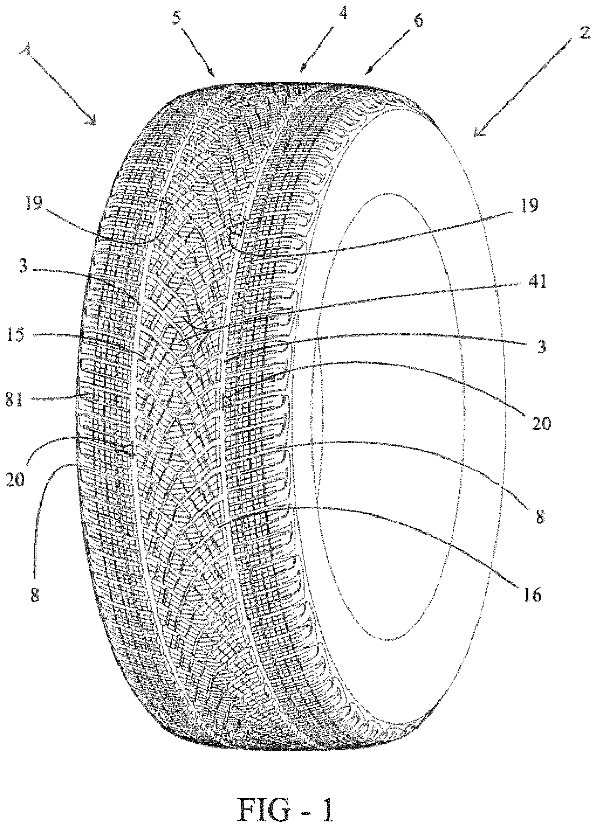

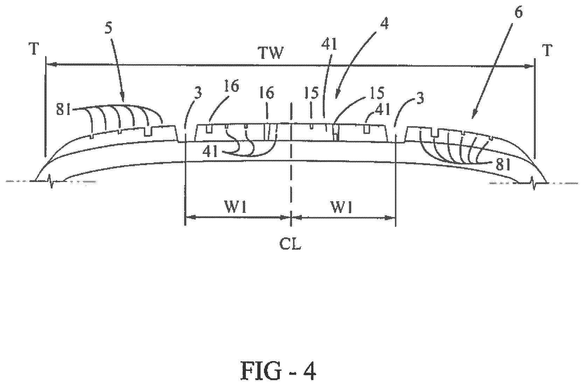

As illustrated in FIG. 1, an example tire 1 in accordance with the present invention has a tread 2, or tread portion. The tread portion 2 is formed from a rubber material exposed on a radially outermost side in the tire radial direction of the tire 1 thereby defining a profile of the tire 1 (FIG. 4). The tread portion 2 has ground contact edges T set at certain positions on both axially outer sides in the tire width direction and a distance between the ground contact edges T in the tire width direction may be set as the ground contact width, or tread width TW.

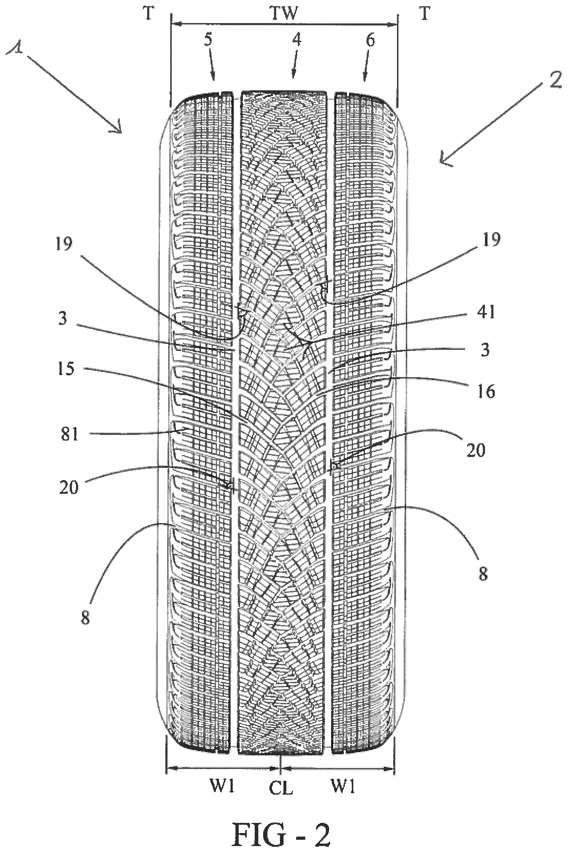

The tread width TW refers to the maximum width in the tire width direction of a region (e.g., a "ground contact region") in which the tread portion 2 of the tire 1 contacts the road surface when the tire 1 is installed and loaded with its nominal load. The ground contact edges T continue in the tire circumferential direction around the tire 1, as illustrated in FIGS. 1 & 2.

Two circumferential main grooves 3 extend along the tire circumferential direction to both sides of the tire equatorial plane CL. Ribs that are parallel to the tire equatorial plane CL and extend along the tire circumferential direction are formed on the surface of the tread portion 2 by the two circumferential main grooves 3. A center rib 4 extends circumferentially to both side of the tire equatorial plane CL and first and second shoulder ribs 5, 6 extend circumferentially on the axially outer sides of the circumferential main grooves 3.

The circumferential main grooves 3 is disposed such that the axial distance W1 from the tire equatorial plane CL to the center of the circumferential main grooves 3 is constant.

Preferably, the axial distance W1 is the tread width TW divided by 4, in a range of from 20 percent to 40 percent, more preferably 20 to 30 percent, of the tread width TW.

The circumferential main grooves 3 have an axial groove width in a range of from 2 percent to 10 percent, preferably 2 to 6 percent, of the tread width TW. Preferably, the circumferential main grooves 3 have a radial groove depth in a range of from 6.0 mm to 10.0 mm.

As shown in FIG. 4, the groove walls of the circumferential main grooves 3 are preferably oriented in a relatively upright, or radial, position.

In accordance with the present invention, a plurality of first main inclined grooves 15 and a plurality of second main inclined grooves 16 is in the center rib 4 of the tread 1.

The first and second main inclined grooves 15, 16 are inclined oppositely with respect to the tire circumferential direction such that the main inclined grooves 15, 16 become distanced from the tire equatorial plane CL from trailing edge in the tire rotational direction (downward in FIGS. 1-3) toward leading edge.

The trailing edges of the first main inclined grooves 15 connect with one circumferential main groove 3, while the trailing edges of the second main inclined grooves 16 connect with the other circumferential main groove 3. Furthermore, the first and second main inclined grooves 15, 16 are arranged such that mutual leading edges thereof are disposed alternately in the tire circumferential direction, extend axially beyond the tire equatorial plane CL, and define two zigzag shaped central grooves 17, 18 along the tire circumferential direction on both axial sides of the tire equatorial plane CL.

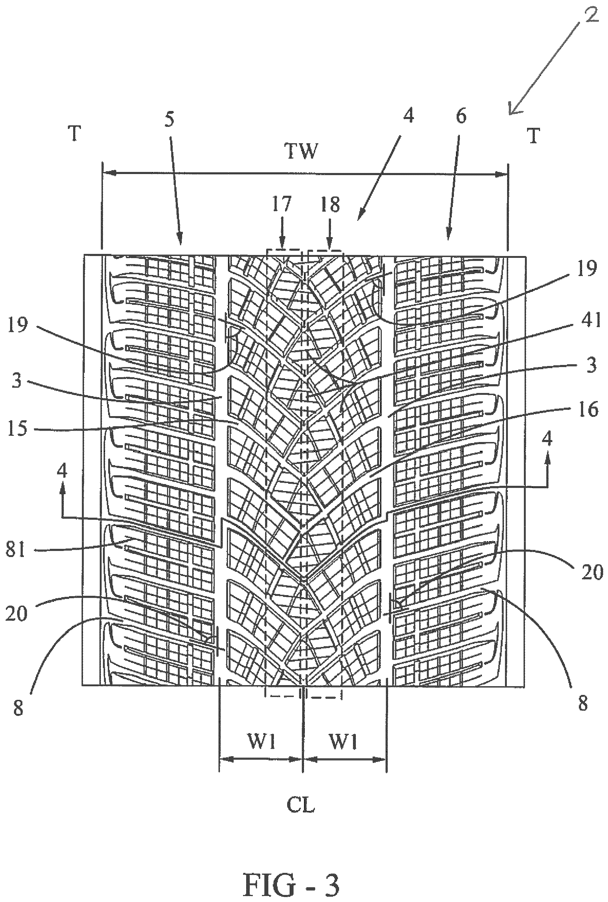

As shown in FIG. 3, the zigzag grooves 17, 18 may not be equidistant from, or symmetric about, the centerline CL of the tread 100.

Each first main inclined groove 15 thereby crosses over, or intersects, with 3, 4, 5, or 6 second main inclined grooves 16 with the leading edges of each first main inclined groove 15 being disposed at a different second main inclined groove 16.

Likewise, each second main inclined groove 16 thereby crosses over, or intersects, with 3, 4, 5, or 6 first main inclined grooves 15 with the leading edges of each second main inclined groove 16 being disposed at a different first main inclined groove 15 (FIG. 3).

The zigzag grooves 17, 18 are preferably formed with a groove width in a range from 2.0 mm to 6.0 mm, preferably 2 to 3.5 mm.

The zigzag grooves 17, 18 are preferably formed with a radial groove depth in a range of from 2.0 mm to 6.0 mm, preferably 2 to 3.5 mm.

The first and second main inclined grooves 15, 16 radially outside of the zigzag grooves 17, 18 are preferably formed with a groove width in a range of 2.0 mm to 10.0 mm, preferably 4 to 8 mm, and a radial groove depth in a range of from 2.0 mm to 10.0 mm, preferably 4 to 8 mm.

The main inclined grooves 15, 16 may have a curved shape (FIGS. 1-3) or may also have a linear shape (not shown).

The first and second main inclined grooves 15, 16 preferably form equal and opposite angles 19 with respect to the circumferential main grooves 3 (tire circumferential direction) at trailing edges connecting to the circumferential main grooves in a range of 56° to 76° and -56° to -76°; or 60° to 70° and -60° to -70°.

The first and second shoulder ribs 5, 6 preferably include inclined transverse grooves 8 extending generally axially outward from the circumferential main grooves 3. The inclined transverse grooves 8 preferably have a groove width from 2.0 mm to 4.0 mm, and a radial groove depth from 2.0 mm to 4.0 mm.

The inclined transverse grooves 8 preferably form equal and opposite angles 19 with respect to the circumferential main grooves 3 (tire circumferential direction) at leading edges connecting to the circumferential main grooves in a range of 75° to 90°and -75° to -90°; or 80° to 90° and -80° to -90°.

The center rib 4 preferably also has a multitude of sipes 41 which may be linear, wavy, zigzag, curved, bent, and/or other suitable configuration.

The sipes 41 preferably extend along the same directions as the first and second main inclined grooves 15, 16.

The first and second shoulder ribs 5, 6 preferably have a multitude of sipes 81 which may be linear, wavy, zigzag, curved, bent, and/or other suitable configuration. The sipes 81 preferably extend along the same directions as the inclined transverse grooves 8.

The sipes 41, 81 may include configurations in which both ends are terminated (e.g., blind), a configuration in which one end is terminated and the other end communicates with a groove/sipe (e.g., one end blind), and a configuration in which both ends communicate with grooves/sipes.

In accordance with the present invention, the tread 2 of the example tire 1 exhibits enhanced water discharge performance and enhanced snow discharge performance such that steering stability on wet road surfaces is increased and steering stability on snow-covered road surfaces is also increased by functioning of the first and second main inclined grooves 15, 16 extending from the center of the tire width direction (at or near the tire equatorial plane CL) toward the outer sides of the tread width TW. Moreover, through the intersections, at multiple locations with multiple grooves, of the first and second main inclined grooves 15, 16, overall stiffness of the tread 2 is maintained such that steering stability on dry road surfaces is acceptable or better. As a result, steering stability on snow-covered road surfaces is improved without causing deterioration in steering stability on dry and wet road surfaces. Additionally, the zigzag shaped central grooves 17, 18 further contribute to this stability.

## Claims

1. A tread for a tire comprising, the tread (2) comprising:
a center rib (4) formed by two circumferential main grooves (3) extending along a tire circumferential direction in a center of a tread width direction, each circumferential main groove (3) having the same axial distance (W₁) from a tire equatorial plane (CL) of the tread (2);
the center rib (4) further having a plurality of first main inclined grooves (15) and a plurality of second main inclined grooves (16), the first and second main inclined grooves (15, 16) being inclined oppositely with respect to the tire circumferential direction such that the main inclined grooves (15, 16) become distanced from the tire equatorial plane from trailing edges in a tire rotational direction toward leading edges;
the trailing edges of the first main inclined grooves (15) connecting with one circumferential main groove (3), while the trailing edges of the second main inclined grooves (16) connect with the other circumferential main groove (3);
the first and second main inclined grooves (15, 16) being arranged such that mutual leading edges thereof are disposed alternately in the tire circumferential direction, extend axially beyond the tire equatorial plane (CL), and (i) define two zigzag shaped central grooves (17, 18) extending along the tire circumferential direction, one zigzag shaped central groove (17) being disposed on one side of the tire equatorial plane (CL) and the other zigzag shaped central groove (18) being disposed on an opposite side of the tire equatorial plane (CL) or (ii) define a zigzag shaped central groove extending along the tire circumferential direction, the zigzag shaped central groove being completely disposed on one side of the tire equatorial plane (CL).

2. The tread as set forth in claim 1 wherein each first main inclined groove (15) intersects with of from 3 to 6 second main inclined grooves (16) with leading edges of each first main inclined groove (15) being disposed at a different second main inclined groove (16); and/or wherein each second main inclined groove (16) intersects with of from 3 to 6 first main inclined grooves (15) with leading edges of each second main inclined groove (16) being disposed at a different first main inclined groove (15).

3. The tread as set forth in claim 1 or 2 wherein each zigzag shaped central groove (17, 18) has a groove width in a range from 2.0 mm to 6.0 mm.

4. The tread as set forth in at least one of the previous claims wherein the first and second main inclined grooves (15, 16) axially outside of the zigzag shaped central grooves (17, 18) have a groove width in a range of from 2.0 mm to 10.0 mm and a radial groove depth in a range of from 2.0 mm to 10.0 mm.

5. The tread as set forth in at least one of the previous claims wherein the first and second main inclined grooves (15, 16) have a curved shape.

6. The tread as set forth in at least one of the previous claims wherein the first and second main inclined grooves (15, 16) form opposite angles with respect to the circumferential main grooves (3), the angles being in a range of from 56° to 76° and - 56° to -76° respectively.

7. The tread as set forth in at least one of the previous claims wherein the first and second main inclined grooves (15, 16) form equal and opposite angles with respect to the circumferential main grooves (3) at trailing edges connecting to the circumferential main grooves (3).

8. The tread as set forth in at least one of the previous claims further including a first shoulder rib (4) and a second shoulder (5) disposed adjacent the center rib (4), the first and second shoulder ribs (4, 5) including inclined transverse grooves (8) extending axially outward from the circumferential main grooves (3).

9. The tread as set forth in claim 8 wherein the inclined transverse grooves (8) have a groove width in a range of from 2.0 mm to 4.0 mm and a radial groove depth in a range of from 2.0 mm to 4.0 mm.

10. The tread as set forth in at least one of the previous claims, in particular in accordance with option (ii) of claim 1, wherein each first main inclined groove (15) intersects with four second main inclined grooves (16) with leading edges of each first main inclined groove (15) being disposed at a different second main inclined groove (16) and/or wherein each second main inclined groove (16) intersects with five first main inclined grooves (15) with leading edges of each second main inclined groove (16) being disposed at a different first main inclined groove (15).

11. The tread as set forth in at least one of the previous claims, in particular in accordance with option (ii) of claim 1, wherein the first and second main inclined grooves (15, 16) have a linear shape.

12. The tread as set forth in at least one of the previous claims, in particular in accordance with option (ii) of claim 1, wherein the first and second main inclined grooves (15, 16) form opposite angles with respect to the circumferential main grooves (3), the angles being in a range of from 50° to 70° and -50° to -70° respectively.

13. The tread as set forth in at least one of the previous claims, in particular in accordance with option (ii) of claim 1, further including a shoulder rib (5) disposed adjacent the center rib (3), the shoulder rib (5) including inclined transverse grooves (9) extending axially outward, the inclined transverse grooves (9) preferably having a groove width in a range of from 2.0 mm to 4.0 mm and a radial groove depth in a range of from 2.0 mm to 4.0 mm.

14. The tread as set forth in claim 13 further including a second shoulder rib (6) disposed adjacent the center rib (3) on an opposite axial side of the center rib from the first shoulder rib (5), the second shoulder rib (6) including inclined transverse grooves (8) extending axially outward at an angle opposite the angle of the inclined transverse grooves (8) of the first shoulder rib (5).

15. A tire having a tread in accordance with at least one of the previous claims.
